# EUROPÄISCHE PATENTSCHRIFT

(11) **EP 1 869 504 B1**
(45) Veröffentlichungstag und Bekanntmachung des Hinweises auf die Patenterteilung: **19.10.2016**
(21) Anmeldenummer: 06708752.8
(22) Anmeldetag: 14.03.2006
(51) Int. Cl.: G01V 3/08

(54) **VERFAHREN ZUR DETEKTION VON IN EINEM MEDIUM EINGESCHLOSSENEN OBJEKTEN SOWIE MESSGERÄT ZUR DURCHFÜHRUNG DES VERFAHRENS**
METHOD FOR DETECTING OBJECTS ENCLOSED IN A MEDIUM AND MEASURING DEVICE FOR CARRYING OUT SAID METHOD
PROCEDE POUR DETECTER DES OBJETS ENFERMES DANS UN SUPPORT ET APPAREIL DE MESURE POUR METTRE LEDIT PROCEDE EN OEUVRE

(30) Priorität: 01.04.2005 DE 102005015326
(43) Veröffentlichungstag der Anmeldung: 26.12.2007
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); RENZ, Kai, 70771 Leinfelden-Echterdingen (DE); KRAPF, Reiner, 72770 Reutlingen (DE)
(86) Internationale Anmeldenummer: PCT/EP2006/060697
(87) Internationale Veröffentlichungsnummer: WO 2006/103162

(56) Entgegenhaltungen:
- EP-A2- 0 735 384
- DE-A1- 4 200 518
- US-A- 5 619 128
- US-A- 5 649 546

## Beschreibung

Die Erfindung betrifft ein Verfahren zur Detektion von in einem Medium eingeschlossenen Objekten nach dem Oberbegriff des Anspruchs 1 sowie ein Messgerät, insbesondere ein handhaltbares Ortungsgerät, zur Durchführung des Verfahrens, nach Anspruch 12.

### Stand der Technik

Zur Detektion von in einem Medium, wie bspw. einer Wand, einer Decke oder einem Boden eingeschlossenen Objekten, wie bspw. elektrischen Leitungen, Wasserleitungen, Rohren, Metallständern oder auch Holzbalken, werden seit längerer Zeit Ortungsgeräte eingesetzt. Dabei finden unter anderem induktive Geräte, d.h. Geräte, die ein Magnetfeld erzeugen, welches durch die in einem Medium eingeschlossenen, metallischen Gegenstände gestört wird, Verwendung. Neben diesen induktiven Geräten werden des Weiteren kapazitive Geräte, Netzspannungsdetektoren sowie Hochfrequenzdetektoren verwendet. Bei Netzspannungsdetektoren oder auch AC-Detektoren wird lediglich ein Empfangsleiterschleifensystem verwendet, um das gewünschte Signal zu detektieren und damit ein entsprechendes Objekt zu lokalisieren.

Ein bei diesen Geräten auftretendes Problem stellt die trotz einer Kalibrierung des Messgerätes vorhandene, enorme Dynamik der verwendeten Sensoren und die damit einhergehende Variation in der Signalstärke des detektieren Messsignals dar. Um mit Metallortungsgeräten möglichst viele metallische Objekte unterschiedlicher Größe und Einlagerungstiefe, d.h. Entfernung des eingeschlossenen Objektes vom Messgerät, detektieren zu können, muss ein hoher Dynamikbereich abgedeckt werden. Neben der Tiefe der zu vermessenden Objekte in dem einschließenden Medium ergibt sich der große Dynamikbereich des Messsignals derartiger Sensoren auch aus den charakteristischen Eigenschaften des jeweils zu detektierenden Materials. So erzeugt bspw. ein tief in einer Wand befindliches Kupferkabel ein um mehrere Größenordnungen kleineres Sensor- bzw. Messsignal, als bspw. ein in 2 cm Tiefe verlegtes Eisenrohr.

Bei bekannten Ortungsgeräten, insbesondere Metall- oder Netzspannungsortungsgeräten gibt es daher häufig die Möglichkeit, die Empfindlichkeit des Sensors manuell, d.h. von einem Anwender ausgehend, nachregeln zu können. Hierzu werden bspw. Drehpotentiometer mit einem entsprechenden, am Gehäuse des Ortungsgerätes ausgebildeten Drehrad genutzt.

Bei anderen Ortungsgeräten kann die Empfindlichkeit des Sensors und somit die Stärke des detektieren Messsignals durch eine jeweilige Neukalibrierung auf die vorhandenen Objekte eingeregelt werden.

Allerdings ist es mit derartigen Geräten schwierig, unterschiedlich große Objekte, wie bspw. Kupferkabel und Stahlträger, mit einer Einstellung des Gerätes zu detektieren, bzw. genau zu lokalisieren. Eine zu große Signalstärke des detektierten Messsignals führt bspw. zu einer Übersteuerung des Empfangsverstärkers eines derartigen Sensors und ist deshalb so kritisch, weil in diesem Fall über einen weiten Bereich keine Signalzu- bzw. Abnahme mehr erkannt werden kann, die für eine genaue Lokalisierung eines eingeschlossenen Objektes zwingend notwendig ist. Ein eingeschlossenes Objekt liefert in einem solchen Fall über einen weiten lateralen Bereich Maximalausschlag des Messgerätes, sodass die genaue Lage des Objektes auch weiterhin dem Anwender unklar bleibt. Darüber hinaus können bspw. eng beieinander liegende Objekte nicht mehr als zwei getrennte Objekte erkannt werden.

Aus dem Stand der Technik sind mehrere Lösungsansätze bekannt, um Signale mit großer Dynamik zu erfassen.

So ist es beispielsweise möglich, die Anzeige des Messgeräts so zu gestalten, dass der gesamte Dynamikbereich abgebildet wird. Dies ist beispielsweise durch eine logarithmische Skala für die mit dem Messsignal korrelierte Anzeigengröße realisierbar. Nachteilig bei einer solchen Darstellung ist jedoch, dass schwache aber auch sehr starke Objekte jeweils am Anfang bzw. am Ende des dynamischen Bereichs der angezeigten Skala auftauchen und somit nur schlecht identifizierbar bzw. lokalisierbar sind, da die angezeigten Änderungen im Display des Messgeräts aufgrund der verwendeten Skalierung relativ klein sind.

Aus der DE 42 00 518 A1 ist ein Metallsuchdetektor bekannt, bei dem mittels eines mit zwei Sprudelpaaren versehen Sensors verborgenes Metall in einer Wand aufgespürt und deren Tiefe ermittelt werden kann. Die beiden Spulenpaare des Sensors der DE 4200518 A1 sind jeweils mit einem Oszillator verbunden und schwingen kontinuierlich mit unterschiedlichen Frequenzen. Die vom Metall beeinflussten Signale werden gemessen und für die Auswertung gewichtet. Eine Intensitätsanzeige des Messgerätes kennzeichnet die Lage des Metalls für einen Anwender. Zur Tiefenmessung für das verborgene Metall, d.h. zur Bestimmung der Tiefe des eingeschlossenen Gegenstandes relativ zu der Oberfläche einer Wand, eines Bodens oder dergleichen wird nach dem Aufspüren des Metalls eine Hebevorrichtung am Messgerät betätigt, die das Metallsuchgerät um einen definierten Betrag anhebt. Mittels einer nochmals durchgeführten Messung wird unter Berücksichtigung des vorgegebenen veränderten Abstands zur Wandoberfläche die Tiefe des verborgenen Metalls berechnet. Eine manuell bedienbare Markiervorrichtung ermöglicht die Kennzeichnung des Ortes der Messung bzw. des eingeschlossenen Gegenstandes.

Die US 5,649,546 offenbart einen Metalldetektor zur Lokalisierung von metallischen Fremdkörpern in menschlichem oder tierischem Gewebe. Die Anzeige des Messgerätes der US 5,649,546 erfolgt in der Art eines Balken Diagramms mit einer zusätzlichen "peak-hold" Funktion.

Die EP 0 735 384 A2 offenbart einen magentischen Metalldetektor für Landmaschinen, mit adaptiver Schwellenwertbildung. Der EP 0 735 384 A2 liegt das Problem zugrunde, dass metallische Gegenstände bei der Ernte nicht in die Erntemaschine gelangen sollen, also zuverlässig detektiert werden müsse, die Erntemaschine selbst jedoch zum ihrem Großteil selbst aus Metall besteht.

Die adaptive Schwellwertbildung der EP 0 735 384 A2 diskriminiert ein Signal, welches aus Fremdobjekt und maschineninduzierten Störungen besteht von solchen Signalen, die nur durch die maschineninduzierten Störungen hervorgerufen werden. Es wird dazu eine feste obere und untere Schwelle gesetzt, die die reinen Störsignale (ohne Fremdobjektsignal) aus dem Messsignal herausfiltern. Diese Schwellen sind im Prinzip vom Bediener der Landmaschine variierbar, um beispielsweise auch Driften der Störsignale Rechnung zu tragen.

Die der Erfindung zugrunde liegende Aufgabe besteht nunmehr darin, ein Verfahren zur Detektion von in einem Medium eingeschlossenen Objekten anzugeben, welches eine möglichst genaue Detektion der Objekte gewährleisten kann.

Die der Erfindung zugrunde liegende Aufgabe wird gelöst durch ein Verfahren zur Detektion von in einem Medium eingeschlossenen Objekten mit den Merkmalen des Anspruchs 1 bzw. durch ein Messgerät mit den Merkmalen des Anspruchs 12.

### Vorteile der Erfindung

Das erfindungsgemäße Verfahren bzw. ein Messgerät zur Durchführung dieses Verfahrens ermöglichen es in vorteilhafter Weise, ein mit dem Messsignal der Detektionsmessung korreliertes zweites Signal zu erzeugen, welches es gestattet, ein über einen großen dynamischen Bereich variierendes Messsignal in einfacher Weise abzubilden. Bei dem erfindungsgemäßen Verfahren wird ein mit einem eingeschlossenen Objekt korreliertes Messsignal gemessen, wobei aus diesem Messsignal ein zweites Signal erzeugt wird, welches die gemessene Signalstärke des Messsignals beispielsweise in segmentierter Weise wiedergibt. Dabei werden einzelnen Segmenteinheiten des zweiten Signals jeweils Intervalle der Signalstärke des Messsignals zugeordnet. Erfindungsgemäß werden die Schwellwerte der einzelnen Segmenteinheiten des zweiten Signals in Abhängigkeit von der gemessenen Signalstärke des Messsignals variiert und aktualisiert.

Neben einer Segmentanzeige ist diese Art der Anzeigensteuerung aber auch Matrixdisplays zu realisieren, auf denen beispielsweise eine Balkenanzeige stufenlos oder ein symbolisierter Zeiger angezeigt wird.

Dies ermöglicht es in vorteilhafter Weise, unterschiedlich große Messsignale auf ein und derselben, für einen Anwender sichtbaren Skala abzubilden.

Vorteilhafte Weiterbildungen des erfindungsgemäßen Verfahrens bzw. eines erfindungsgemäßen Messgeräts zur Durchführung dieses Verfahrens sind durch die in den abhängigen Ansprüchen aufgeführten Merkmale möglich.

In einer vorteilhaften Ausführungsform werden die Schwellwerte der einzelnen Segmenteinheiten des zweiten Signals ausgehend von einer vorgegebenen, initialen Segmentierung variiert. Dabei ist es besonders vorteilhaft, dass die Schwellwerte der einzelnen Segmenteinheiten des zweiten Signals nur angehoben werden, wenn die Signalstärke des Messsignals einen vorgegebenen ersten Grenzwert überschreitet.

Bei einer derartigen Ausführungsform besitzt ein nach dem erfindungsgemäßen Verfahren arbeitendes Messgerät eine vorgegebene, initiale Segmentierung die das mit einem eingeschlossenen Objekt korrelierte Messsignal in eine für einen Anwender leicht verständliche Segmentdarstellung, wie beispielsweise eine Balkenanzeige übersetzt. Solange die aktuell gemessenen Messsignale unterhalb des mit der vorgegebenen, initialen Segmentierung maximal darstellbaren Signalgröße bleiben, wird bei dem erfindungsgemäßen Verfahren mit dieser vorgegebenen, initialen Segmentierung gearbeitet. Erst wenn das mit einem eingeschlossenen Objekt korrelierte Messsignal eine Signalstärke erreicht, die mit der vorgegebenen, initialen Segmentierung nicht mehr darstellbar ist, da diese Signalstärke des Messsignals zu einem Vollausschlag des segmentierten zweiten Signals führen würde, werden die Schwellwerte der einzelnen Segmenteinheiten des zweiten Signals erhöht.

In vorteilhafter Weise entspricht also der erste vorgegebene Grenzwert für die Signalstärke des Messsignals, der maximalen, mit der initialen Segmentierung darstellbaren Signalstärke des Messsignals.

Steigt die Signalstärke des Messsignals über diesen ersten, vorgegebenen Grenzwert hinaus an, werden die Schwellwerte der einzelnen Segmenteinheiten angehoben, falls eine neue maximale Signalstärke gemessen wird. Die Schwellwerte der einzelnen Segmenteinheiten des zweiten Signals werden somit mit steigender Signalstärke des Messsignals angehoben, falls ein erster Grenzwert der Messsignalstärke überschritten wird.

In einer vorteilhaften Ausführungsform des erfindungsgemäßen Verfahrens werden die Schwellwerte der einzelnen Segmenteinheiten des zweiten Signals derart angehoben, dass das maximale mit der nunmehr aktualisierten Segmentierung darstellbare Messsignal der neu gemessenen, maximalen Signalstärke des Messsignals entspricht. Erreicht das mit einem eingeschlossenen Objekt korrelierte Messsignal einen neuen Maximalwert, so wird in vorteilhafter Weise eine neue Segmentierung des zweiten Signals, das die Information an einen Anwender übermittelt, berechnet. So ist es möglich, mit einem endlichen dynamischen Bereich für das zweite, dem Anwender zu übermittelnden Signal einen im Prinzip unbegrenzten dynamischen Bereich des Messsignals abzubilden. Auf diese Weise ist es möglich, jedes gemessene Messsignal mit einer vorgegebenen Darstellungsart abzubilden, ohne dass ein hoher dynamischer Bereich des Messsignals auch zu einer entsprechenden Spreizung der an einen Anwender wiedergegebenen Messwerte führt.

Sinkt die Signalstärke des aktuell gemessenen Messsignals unter den kleinsten Schwellwert der aktuell vorliegenden Segmentierung, so werden die Schwellwerte der einzelnen Segmenteinheiten des zweiten Signals neu berechnet und insbesondere in diesem Fall abgesenkt. Dabei werden die Schwellwerte der einzelnen Segmenteinheiten jedoch nicht unter die initiale Segmentierung für das zweite Segment abgesenkt.

In vorteilhafter Weise werden die Schwellwerte der einzelnen Segmenteinheiten des zweiten Signals auf eine vorgegebene, initiale Segmentierung zurückgesetzt, falls die Signalstärke des Messsignals einen zweiten Grenzwert unterschreitet.
In vorteilhafter Weise werden die Schwellwerte der einzelnen Segmenteinheiten des zweiten Signals automatisch durch eine Steuerroutine in Abhängigkeit von der jeweiligen Signalstärke des mit einem eingeschlossenen Objekt korrelierten Messsignals berechnet und von dieser Routine gesetzt. Ein Eingreifen eines Anwenders, wie beispielsweise das Umschalten zwischen verschiedenen dynamischen Bereichen für eine Ausgabeeinheit ist bei dem erfindungsgemäßen Verfahren nicht notwendig.

Das erfindungsgemäße Verfahren misst das mit einem eingeschlossenen Objekt korellierte Messsignal als Funktion einer lateralen Verschiebung eines Sensors. Dabei wird ein Sensor in lateraler Richtung über ein eingeschlossenes Objekt verschoben, beispielsweise verfahren und die entsprechende Signalstärke des mit dem eingeschlossenen Objekt korrelierten Messsignals wird als Funktion des Orts gemessen und in ein zweites segmentiertes Signal umgewandet, welches einem Anwender zur Kenntnis gebracht wird.

Das erfindungsgemäße Verfahren wird in vorteilhafter Weise durch ein Messgerät, insbesondere durch ein handgehaltenes Ortungsgerät zur Lokalisierung von in einem Medium eingeschlossenen Objekten realisiert. Ein solches Messgerät verfügt dabei über eine Ausgabeeinheit, die eine Wiedergabe einer mit dem Messsignal korrelierten Ausgabengröße in segmentierter Weise gestattet. Über diese Ausgabeeinheit wird einem Anwender des Messgeräts bzw. des zugrunde liegenden erfindungsgemäßen Verfahrens das aus dem Messsignal abgeleitete segmentierte zweite Signal übermittelt.

Diese Ausgabeeinheit kann beispielsweise eine optische Ausgabeeinheit in Form eines Displays sein.

In einer vorteilhaften Ausführungsform des erfindungsgemäßen Messgeräts ermöglicht die optische Ausgabeeinheit die Wiedergabe des zweiten Signals in Form einer Balkenanzeige bzw. eines Balkendiagramms. Andere Darstellungen sind aber ebenso möglich.
Alternative Ausgabeeinheiten sind ebenso möglich. Insbesondere sei angemerkt, dass beispielsweise das erfindungsgemäße Verfahren auch mit einer akustischen Ausgabeeinheit realisierbar ist. Hierbei kann die Segmentierung beispielsweise in Form von Wiederholfrequenzen bzw. Tonfrequenzen erfolgen.

Ein nach dem erfindungsgemäßen Verfahren arbeitendes Messgerät, beispielsweise ein Ortungsgerät besitzt in vorteilhafter Weise zumindest einen Sensor, der ein Empfangsleiterschleifensystem aufweist. Auf diese Weise können beispielsweise stromführende Kabel detektierte werden, indem beispielsweise die im Empfangsleiterschleifensystem, beispielsweise einer Spule, induzierte Spannung gemessen wird.

Alternative Ausführungsformen eines erfindungsgemäßen Messgerätes können auch über zumindest eine Sendespule und zumindest eine Empfangsspule, die bespielsweise durch ein Empfangsleiterschleifensystem gebildet sein kann, verfügen. Ein in einem Medium eingeschlossenes Objekt erzeugt in einem solchen Sensor in bekannter Weise eine Induktionsspannung, die beispielsweise direkt oder in verarbeiteter Form als Messsignal, welches mit dem eingeschlossenen Objekt korreliert ist gemessen werden kann.

Bei einem Ortungsgerät, insbesondere einem handhaltbaren Ortungsgerät, wird über die Ausgabeeinheit eine mit dem Messsignal korrelierte Ausgabegröße wiedergegeben, wobei die Darstellung der Signalstärke des Messsignals in Segmenteinheiten erfolgt, die Intervallen der Signalstärke des Messsignals zugeordnet werden. Nach dem erfindungsgemäßen Verfahren werden die Schwellwerte der einzelnen Segmenteinheiten der Ausgabegröße in Abhängigkeit von der gemessenen Signalstärke des Messsignals angepasst.

So kann beispielsweise in vorteilhafter Form die im beschriebenen Sensor induzierte Messspannung aufgrund eines eingeschlossenen Objekts in eine zweite Signalgröße umgewandelt werden, die als Ausgabegröße in Form eines segmentierten Balkendiagramms wiedergegeben wird. Dabei spiegelt die Länge des Balkens die Signalstärke des Messsignals wieder. Die einzelnen Segmente des Balkens sind Intervallen des Messsignals, also beispielsweise der Induktionsspannung zugewiesen, wobei jedoch in Abhängigkeit von der maximalen Signalstärke des Messsignals das einem Balkensegment zugewiesene Intervall der Signalstärke jeweils neu berechnet und angepasst wird.

Das erfindungsgemäße Verfahren bzw. ein nach dem erfindungsgemäßen Verfahren arbeitendes Messgerät ermöglicht so in einfacher Weise die Darstellung von Messsignalen, die über einen großen dynamischen Bereich variieren.

Weitere Vorteile des erfindungsgemäßen Verfahrens bzw. eines nach diesem Verfahren arbeitenden Ortungsgeräts sind in der nachfolgenden Zeichnung sowie in der zugehörigen Beschreibung offenbart.

### Zeichnung

In der Zeichnung ist ein Ausführungsbeispiel für das erfindungsgemäße Verfahren sowie ein erfindungsgemäßes Ortungsgerät dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu neuen, weiteren sinnvollen Kombinationen zusammenfassen, die somit als ebenfalls in diesem Text offenbart anzusehen sind.

Es zeigt:
- Fig. 1: eine typische Messsituation zur Lokalisierung von einem in einem Medium eingeschlossenen Objekt in einer schematisierten Darstellung,
- Fig. 2a: eine Messsituation mit einem erfindungsgemäßen Ortungsgerät,
- Fig. 2b: den Verlauf des bei einer Messung gemäß Fig. 2a detektierten Messsignals UM, sowie die aufgrund des jeweils gemessenen Messsignals nach dem erfindungsgemäßen Verfahren durchgeführte Segmentierung in einer schematischen Darstellung
- Fig. 2c: die sich aus der Segmentierung gemäß Figur 2b ergebende Ausgabegröße in einer schematischen Darstellung,
- Fig. 3: ein Beispiel für eine vorgegebene, initiale Segmentierung, ins schematischer Darstellung, sowie eine zugehörige Darstellung der Ausgabegröße S
- Fig. 4: eine perspektivische Darstellung eines Ausführungsbeispiels für ein erfindungsgemäßes Messgerät.

### Beschreibung der Ausführungsbeispiele

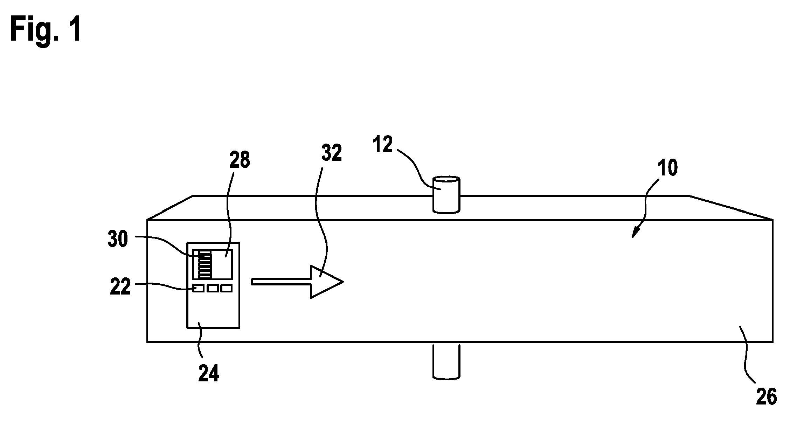

Figur 1 zeigt eine typische Mess-Situation zur Ortung von in einem Medium 10, bspw. einer Wand, einem Boden oder einer Decke eingeschlossenen Objekten. Ein Ortungsgerät 24 wird über die Oberfläche 26 eines zu untersuchenden Mediums 10 verschoben, um die Lage eines in dem Medium 10 eingeschlossenen Objektes 12 zu detektieren, d.h. zu lokalisieren. Bei einem solchen Objekt 12 kann es sich bspw. um eine elektrische Leitung, Rohre, bspw. Wasserrohre, Metallständer, oder auch andere Gegenstände, wie beispielsweise Holzbalken handeln. Ein derartiges Ortungsgerät 24 kann insbesondere einen induktiven Sensor mit zumindest einer Sendespule sowie einem als Empfangseinheit dienenden Empfangsleiterschleifensystem aufweisen. Ein solches Messgerät kann aber auch beispielsweise ein Netzspannungsdetektor sein, der lediglich ein Empfangsleiterschleifensystem, beispielsweise eine Spule als Sensor zur Detektion des Messsignals besitzt.

Das Messgerät kann darüber hinaus auch eine Kombination von verschiedenen Sensoren aufweisen.

Befindet sich nun ein entsprechender Gegenstand in der Nähe der Empfangsgeometrie, so modifiziert dieser Gegenstand beispielsweise das von der Sendegeometrie erzeugte Feld, so dass ein resultierender Fluss in der Empfangsspule induziert wird, der in der Empfangsspule bzw. einem Empfangsleiterschleifensystem induzierte Fluss kann dann als Messspannung beispielsweise an der Spule oder nachgeschalteten Messverstärkern abgegriffen werden. Das detektierte Messsignal, beispielsweise die abgegriffene Messspannung U_{M} ist umso größer, je näher der induktive Sensor dem eingeschlossenen Objekt kommt.

Nähert sich ein derartiges Ortungsgerät 24 einem eingeschlossenen Objekt 12, wie dies beispielsweise durch Verfahren in Richtung des Pfeils 32 gemäß der Darstellung in Figur 1 der Fall wäre, so steigt das detektierte Messsignal an.

Insbesondere bei Geräten des Standes der Technik kann es nun zu Mess-Situationen in der Nähe des eingeschlossenen Gegenstandes 12 kommen, bei denen über einen größeren Verfahrweg des Ortungsgerätes 24 im Bereich des zu detektierenden Objektes 12 das Messsignal derart stark ist, dass über den gesamten Bereich der Maximalausschlag der Ausgabegröße, beispielsweise der abgegriffenen Messspannung U_{M} wiedergegeben wird. In diesem Fall ist eine exakte Ortung der Lage des eingeschlossenen Objektes 12 nicht möglich. Neben einer entsprechenden Ansteuerelektronik, der zugehörigen Energieversorgung sowie einer Auswerteeinheit für das detektierte Messsignal weist ein derartiges Ortungsgerät 24 bspw. auch eine grafische Anzeige 28 auf, die eine Ausgabegröße wiedergibt, die mit der Stärke des detektieren Messsignals korreliert ist. Die Ausgabegröße kann bspw. in Form eines Balkendiagramms 30 dargestellt werden, wobei die Anzahl der beleuchteten Balken zwischen einem Minimalwert und einem Maximalwert ein Maß für die Stärke des Messsignals darstellen. Neben der in Figur 1 gezeigten Darstellung der Ausgabegröße mittels eines Balkendiagramms 30 sind auch andere Ausgabeformen, insbesondere weitere optische Darstellungen, möglich.

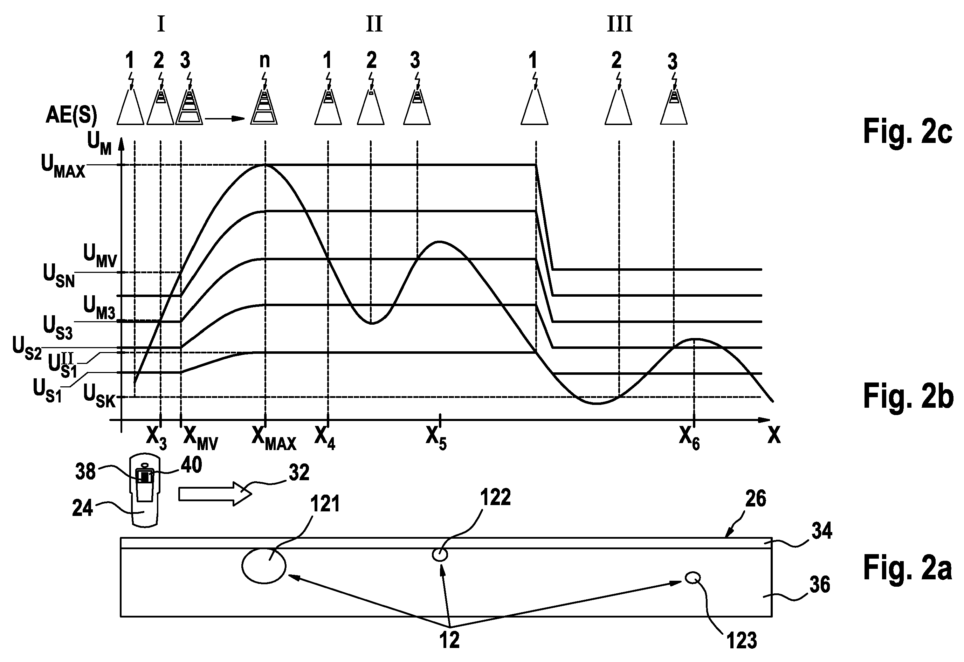

Fig. 2a zeigt eine modifizierte Messsituation, bei der drei Objekte 12 (121, 122, 123) unterschiedlicher Größe in einem Medium 36 eingeschlossen sind. Darüber hinaus haben diese Objekte zudem unterschiedliche Abstände zu der Oberfläche 26 einer Wand 34. Bei der in Fig. 2a beschriebenen Messsituation wird ein Messgerät, in diesem Fall ein Ortungsgerät zur Lokalisierung von in einem Medium eingeschlossenen Objekten in Pfeilrichtung 32, d.h lateral über die Oberfläche 26 einer Wand 34 verschoben, beispielsweise verfahren, wobei ein Messsignal U_{M}, beispielsweise eine mit den Objekten 12 korrelierte, in einem Empfangssystem des Messgeräts 24 induzierte Spannung, gemessen wird. Der Verlauf der Messspannung U_{M} als Funktion der lateralen Position X des Messgeräts auf der Wand 34 ist in Fig. 2b wiedergegeben.

Aufgrund von unterschiedlichen Materialeigenschaften sowie beispielsweise auch der unterschiedlichen Größe oder aufgrund des unterschiedlichen Abstands der eingeschlossenen Objekte von der Oberfläche 26 der zu untersuchenden Wand 34 kommt es zu unterschiedlichen Signalstärken des detektierten Messsignals. Dabei kann ein solches Messsignal über mehrere Größenordnungen variieren, so dass eine übersichtliche Wiedergabe eines solchen Messsignals schwierig ist.

Das im folgenden zu beschreibende erfindungsgemäße Verfahren ermöglicht es, dass über einen großen dynamischen Bereich variierende detektierte Messsignal U_{M} mittels einer Ausgabeeinheit AE des Messgeräts 24, beispielsweise in Form eines segmentierten Balkendiagramms 38, über ein optisches Display 40 wiederzugeben.

Im Folgenden wird das erfindungsgemäße Verfahren, welches das detektierte Messsignal UM auf ein segmentiertes Ausgabesignal S transferiert am Beispiel der Messsituation in Fig. 2a bzw. Fig. 2b erläutert.

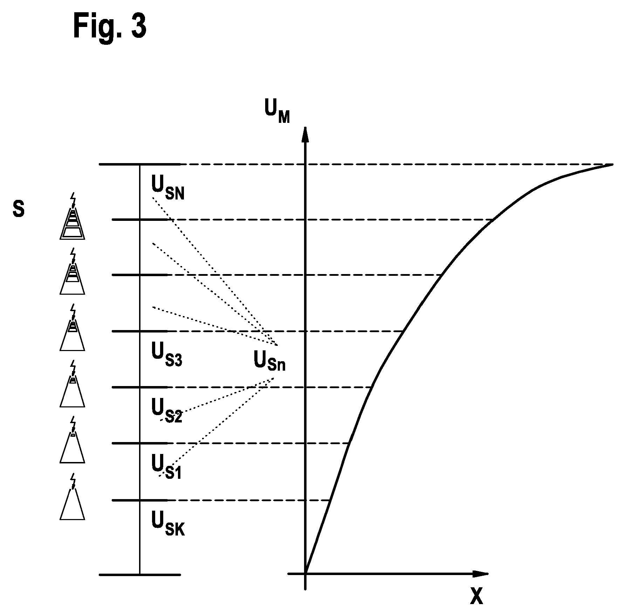

Das erfindungsgemäße Verfahren verwendet eine erste fest eingestellte Schwelle U_{SK} und darüber hinaus eine Mehrzahl von weiteren Schwellen U_{S1} bis U_{Sn}, die variiert werden können. Beim Aktivieren, d. h. Einschalten, eines erfindungsgemäßen Messgeräts weist dieses eine initiale, vorgegebene Segmentierung, d. h. Abfolge von Schwellwerten U_{SK} bis U_{Sn} auf, wie diese unter Position I in Fig. 2b bzw. Figur 2c oder auch in Figur 3 dargestellt ist. Diese initiale, vorgegebene Segmentierung ist hochauflösend, so dass auch sehr kleine Objekte, die sehr kleine Signalstärken erzeugen, erkannt werden können. Mit dieser unter I in Fig. 2b bzw. 2b dargestellten Segmentierung wird bei Annäherung an größere Objekte sehr schnell ein Vollausschlag der Anzeigemittel erreicht.

Wird beispielsweise das Messgerät 24 in Richtung des Pfeils 32 auf ein großes Objekt 121 zubewegt, wie dies in Fig. 2a dargestellt ist, so steigt das Messsignal U_{M} mit Annäherung an das Objekt 121 rasch an, wie dies in Fig. 2b gezeigt ist. Übersteigt das Messsignal UM jeweils eine Segmentschwelle U_{Sn}, so wird aus dem Messsignal U_{M} ein zweites Signal S erzeugt, welches in einer Ausgabeeinheit des Messgeräts beispielsweise in dem in Fig. 2a dargestellten Display 40 wiedergegeben wird. So kann beispielsweise für jede vom Messsignal überschrittene Schwelle U_{Sn} einen Balken eines Balkendiagramms erzeugt werden, wie dies in der Fig. 2c dargestellt ist. (Siehe hier AE(S) ). So zeigt beispielsweise die Ausgabeeinheit AE für dieses zweite Signal S bei einer Position X₃ des Messgerätes drei Segmenteinheiten, da das entsprechende Messsignal U_{M3} drei dynamische Schwellen U_{Sn} überschritten hat. Die entsprechende Anzeige der Ausgabeeinheit AE ist unter I2 in Fig. 2c wiedergegeben. An einer Position X_{V} erreicht das detektierte Messsignal U_{M} einen Wert U_{MV}, der bei der vorliegenden initialen Segmentierung gemäß Darstellung I zu einem Vollausschlag der Anzeigeeinheit AE führt, wie dies unter 13 in der Fig. 2c dargestellt ist.

Mit Überschreiten dieses Grenzwerts U_{MV}, der zu einem Vollausschlag des das zweite Signal wiedergebenden Ausgabeeinheit AE führt, werden die Schwellwerte U_{S1} bis U_{Sn} neu berechnet, d. h. bei einem Vollausschlag der Anzeige werden die Schwellen für die einzelnen Anzeigeelemente an die aktuell vorliegende Signalstärke des Messsignals angepasst.

Wird das Messgerät 24 nun ausgehend von der Position X_{V} weiter in Pfeilrichtung 32 auf das Objekt 121 hin verschoben, so steigt sowohl die Signalstärke des Messsignals U_{M} an, als auch die Schwellwerte U_{S1} bis U_{Sn}. Die Schwellwerte werden dabei jeweils der aktuellen maximalen Signalstärke Uₘₐₓ angepasst, so dass die Anzeigeinheit AE über diesen Bereich hin jeweils einen Vollausschlag anzeigt, wie dies mit dem Pfeil 42 in Fig. 2c symbolisiert sein soll.

Da hier ein ständiger Vollausschlag in der Ausgabeeinheit AE angezeigt wird, kann einem Anwender zusätzlich noch ein weiteres Signal übermittelt werden, dass diesem signalisiert, dass der Messwert aktuell noch ansteigt. Dieses zusätzliche Signal könnte beispielsweise das mit einem eingeschlossenen Objekt korrelierte Messsignal U_{M} sein.

Fällt das aktuell gemessene Messsignal U_{M} bei weiterem Verschieben des Messgeräts 24 in Pfeilrichtung 32 gegenüber dem maximal gemessenen Wert U_{Max} wieder ab, so bleibt vorerst die zuletzt errechnete Segmentierung des zweiten Signals S, d. h. die Wertestaffelung der einzelnen Segmentschwellen erhalten, wie dies über dem Bereich II in Fig. 2b dargestellt ist. Aufgrund der gegenüber der ansteigenden Flanke im Bereich I in Fig. 2b nunmehr geänderten Segmentierung fällt das aus dem Messsignal generierte, mittels der Anzeigeeinheit AE visualisierte zweite Signal S mit zunehmendem Abstand vom signalerzeugenden Objekt 121 schneller wieder ab. So würde beispielsweise an einer Position X₄ mit der ursprünglichen Segmentierung noch ein Vollausschlag des zweiten Signals S auf der Ausgabeeinheit AE erzeugt werden, während mit der aktuellen Schwellwerteinstellung lediglich drei Segmente wiedergegeben werden. (Siege Position II1 in Fig.2c)

Durch die erfindungsgemäße dynamische Schwellenanpassung ist das zweite Signal S, welches mittels der Ausgabeeinheit AE einem Anwender übermittelt wird jedoch an der Position II1 schon deutlich abgefallen, so dass eine genauere Lokalisierung des eingeschlossenen Objekts, in diesem Fall des Objekts 121, an der Position Xₘₐₓ möglich wird.

Solange das aktuell gemessene Messsignal U_{M} den maximalen Schwellwert U_{SN} =UM bei der weiteren Messung nicht überschreitet, werden die Schwellwerte auch nicht weiter angehoben, d.h. vergrößert. So wird beispielsweise an der Position X₅ zwar ein relatives Maximum des Messsignal U_{M} erzeugt, welches auf den eingeschlossenen Gegenstand 122 zurückzuführen ist, jedoch überschreitet die Signalstärke des Messsignals an dieser Stelle lediglich den aktuell eingestellten dritten Schwellwert der Segmentierung. (Siehe Position 113 in Figur 2a bzw. 2b) Aus diesem Grund beträgt das aus dem Messsignal UM generierte, zweite Signal S, welches zur Anzeige gebracht wird auch lediglich nur drei Segmenteinheiten, wie dies unter 113 in Fig. 2c angedeutet ist.

Fällt nun die aktuelle Signalstärke des Messsignals U_{M} unter einen vorgegebenen Grenzwert U_{G2}, der im Ausführungsbeispiel der Fig. 2b gleich dem aktuellen Wert U_{S1(II)} der niedrigsten Schwelle ist, so werden die Schwellwerte nunmehr neu berechnet. Im Ausführungsbeispiel der Figuren 2 werden die Schwellwerte beispielsweise auf die Werte der initialen Segmentierung zurückgesetzt. Übersteigt das aktuelle Messsignal sodann wieder den niedrigsten Schwellwert, so wird aus der Signalstärke des Messsignals U_{M} das zweite, der Anzeige dienende Signal S generiert, welches in diesem Fall dann entsprechend einem Balkensegment visualisiert werden könnte.

Alternativ wäre es auch denkbar, dass man die Schwellwerte nicht erst dann wieder reduziert, wenn der kleinste aktuelle Schwellwert wieder unterschritten wird, sondern beispielsweise auch schon nach Erreichen eines Maximums die Schwellen mit abnehmender Signalstärke des Messsignals wiederum schrittweise zurückfährt.

An einer Position X₆ gemäß Fig. 2b erreicht das aktuelle Messsignal U_{M} aufgrund eines weiteren eingeschlossenen Gegenstands 123 ein weiteres lokales Maximum U_{M6}. Da das Messsignal an dieser Stelle die zweite dynamische Schwelle überschritten hat, wird erfindungsgemäß aus diesem Messsignal das zweite Anzeigesignal mit zwei Segmenten beispielsweise zwei Balkenelementen, wie dies in Fig. 2c unter III3 dargestellt ist, generiert.

Das Anheben oder Absenken der Schwellwerte kann nach unterschiedlichen Algorithmen vonstatten gehen. So könnten die Schwellwerte beispielsweise äquidistant, d.h. linear angehoben werden oder beispielsweise aber auch logarithmisch oder ggf. auch exponentiell. Andere funktionelle Abhängigkeiten zwischen den einzelnen Schwellwerten sind jedoch prinzipiell ebenso möglich.

Figur 3 zeigt noch einmal in einer stark schematisierten Darstellung die dem erfindungsgemäßen Verfahren zugrunde liegende Segmentierung. Das Messsystem besitzt eine konstante Schwelle U_{SK} sowie eine Mehrzahl von dynamisch anpassbaren Schwellen U_{S1} bis U_{SN}. Übersteigt die Signalstärke des Messsignals, welches beispielsweise die in einer Spule induzierte Spannung sein kann den Schwellwert der ersten dynamischen Schwelle U_{S1}, so wird aus dem Messsignal ein zweites Signal S generiert, welches über eine Ausgabeeinheit AE, beispielsweise einem Display 40 des Messgeräts einem Anwender des erfindungsgemäßen Verfahrens übermittelt wird. Dieses zweite Signal S kann beispielsweise in Form einer Balkenanzeige 38 realisiert werden, wie dies in der ganz linken Spalte der Fig. 3 in schematisierter Weise dargestellt ist.

Die steigende Signalstärke wird jeweils bei Überschreiten des nächst höheren Schwellwerts U_{Sn} ein weiteres segmentiertes Signalelement des zweiten Signals erzeugt.

Erreicht die Signalstärke des Messsignals U_{M} den maximalen Schwellwert U_{SN}, so werden die Schwellwerte U_{Sn} neu berechnet. Die Schwellwerte U_{Sn} werden also mit steigender Signalstärke angehoben, d.h vergrößert, wobei die Schwellwerte U_{Sn} der einzelnen Segmenteinheiten jeweils auf die neue maximale Signalstärke Uₘₐₓ angepasst werden. Die Schwellwerte werden dabei derart angehoben, dass das maximale mit der aktualisierten Segmentierung darstellbare Messsignal der neu gemessenen maximalen Signalstärke entspricht.

Diese Art der Anzeigensteuerung ist prinzipiell nicht auf eine Segmentanzeige beschränkt. So ist es beispielsweise auch möglich diese Art der Anzeigensteuerung mit einem Matrixdisplay zu verwirklichen, bei dem beispielsweise eine Balkenanzeige stufenlos wiedergegeben wird oder ein graphisch erzeugtes Zeigerelement angezeigt und entsprechend der Signalstärke des Messsignals bewegt wird. Auch mit Analoginstrumenten ist eine derartige Art der Anzeigensteuerung umzusetzen, in dem beispielsweise die Verstärkung geregelt wird, um somit den Dynamikbereich adaptiv anzupassen. Auf diese Weise kann die Matrixanzeige bzw. ein entsprechendes Analoginstrument immer perfekt an die Messdaten, d. h. die Signalstärke des mit einem eingeschlossenen Objekt korrelierten Messsignals angepasst werden.

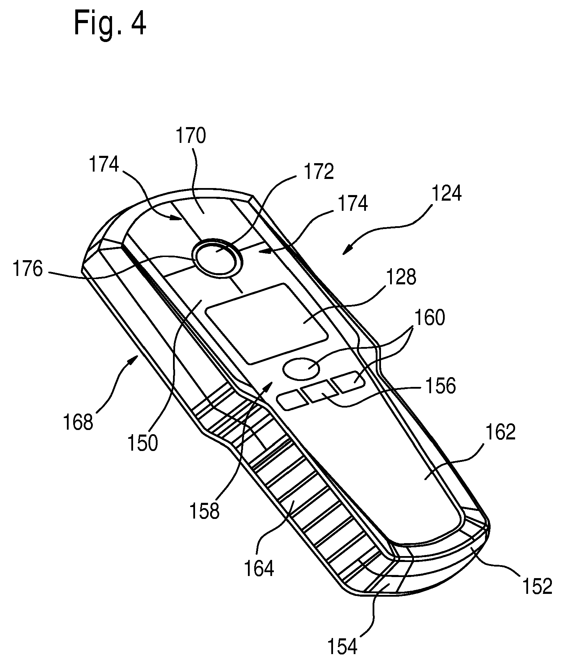

Fig. 4 zeigt ein Ausführungsbeispiel für ein erfindungsgemäßes Messgerät in einer perspektivischen Darstellung.

Figur 4 zeigt ein erfindungemäßes Messgerät 124 in einer perspektivischen Übersichtsdarstellung. Das Messgerät besitzt ein Gehäuse 150, das aus einer oberen und einer unteren Halbschale 152 bzw. 154 gebildet ist. Im Inneren des Gehäuses ist zumindest ein Sensor mit einer Empfangsleiterschleifensystem, beispielsweise einer Spulenanordnung vorgesehen. Weitere Sensoren, wie beispielsweise induktive oder kapazitive Sensoren können ebenfalls im Messgerät 124 integriert sein. Darüber hinaus weist das Innere des Messgerätes 124 eine Signalerzeugungs- und Auswerteelektronik, sowie eine Energieversorgung, bspw. über Batterien oder Akkus, auf. Das Messgerät gemäß Figur 4 besitzt darüber hinaus eine Anzeige 128 zur Ausgabe eines mit dem Messsignal korrelierten Ausgabesignals. Über die Anzeige 128, bspw. eine segmentierte Balkenanzeige oder aber auch eine graphische Anzeige unter Verwendung eines LCDs, ist es möglich, die Stärke des detektierten Messsignals U_{M} direkt oder auch das daraus abgeleitete Signal S in segmentierter Weise darzustellen. Auch ist es mit der Anzeige 128 möglich, dass Messsignal eines ersten Detektors, beispielsweise eines induktiven Ortungsdetektors direkt anzuzeigen und das Messsignals beispielsweise eines Netzspannungs- oder AC-Detektors nicht direkt, sondern in der beschriebenen angeleiteten, segmentierten Form S darzustellen.

Des Weiteren besitzt das erfindungsgemäße Messgerät ein Bedienfeld 158 mit einer Reihe von Bedienelementen 160, die es ermöglichen, das Gerät bspw. ein- bzw. auszuschalten, sowie gegebenenfalls einen Messvorgang bzw. einen Kalibrierungsvorgang zu starten.

Im Bereich unterhalb des Bedienfeldes 158 weist das Messgerät gemäß Figur 5 einen Bereich 162 auf, der in seiner Form und Materialgestaltung als Handgriff 164 zur Führung des erfindungsgemäßen Messgerätes ausgestaltet ist. Mittels dieses Handgriffs 164 wird das Messgerät mit seiner, dem Betrachter der Figur 4 abgekehrten Unterseite über eine Oberfläche eines zu untersuchenden Gegenstandes bzw. eines Mediums, wie bspw. der Oberfläche 26 einer Wand 10 gemäß der schematischen Darstellung in Figur 3, geführt.

Auf der dem Handgriff 164 entgegensetzten Seite 170 des Messgerätes 124 weist dieses eine das Gehäuse durchdringende Öffnung 172 auf. Die Öffnung 172 ist konzentrisch zumindest zu dem Empfangsleiterschleifensystem 134 des Sensors angeordnet. Auf diese Weise entspricht der Ort der Öffnung 172 im Messgerät, dem Zentrum des Ortungssensors, sodass dem Anwender eines derartigen Gerätes damit auch gleichzeitig die genaue Lage eines evtl. detektierten Gegenstandes angezeigt wird. Darüber hinaus weist das Messgerät zusätzlich auf seiner Oberseite Markierungslinien 174 auf, über die das genaue Zentrum der Öffnung 172 und somit die Lage eines eingeschlossenen Gegenstandes vom Anwender lokalisiert werden kann. Die Öffnung 172 wird begrenzt durch eine teiltransparente Hülse 176, in die das Licht unterschiedlicher Leuchtdioden eingespeist werden kann. Detektiert das Messgerät ein Objekt, so kann die Hülse beispielsweise rot beleuchtet werden, um einem Anwender mitzuteilen, dass ein Objekt am Ort der Öffnung 172 lokalisiert worden ist und er daher beispielsweise von einer Bohrung an dieser Stelle absehen sollte. Es kann beispielsweise grünes Licht in die Hülse eingespeist werden, um einem Anwender zu signalisieren, dass kein Objekt lokalisiert worden ist, und er beispielsweise eine Bohrung im Bereich der Öffnung 172 des Messgerätes vornehmen kann.

Darüber hinaus ist es auch möglich und vorteilhaft, einen Sensor nach dem erfindungsgemäßen Verfahren direkt oder als Anbauteil in eine Werkzeugmaschine, bspw. in ein Bohrwerkzeug zu integrieren, um einen Anwender ein sicheres Arbeiten mit dieser Maschine zu ermöglichen.

Das erfindungsgemäße Verfahren bzw. ein nach diesem Verfahren arbeitendes Messgerät ist nicht auf das in den Figuren dargestellte Ausführungsbeispiel beschränkt.

Insbesondere ist das erfindungsgemäße Verfahren nicht beschränkt auf die Verwendung lediglich einer Empfangsspule bzw. eines Empfangsleiterschleifensystems. Ein entsprechendes Messgerät, beispielsweise ein Ortungsgerät könnte auch einen induktiven Kompensationssensor aufweisen. Ein derartiger Sensor umfasst bspw. drei Spulen, wobei eine erste Sendespule an einem ersten Sender angeschlossen ist, eine gegebenenfalls vorhandene zweite Sendespule an einem zweiten Sender angeschlossen ist und ein als Empfangsspule dienendes Empfangsleiterschleifensystem an einem Empfänger angeschlossen ist. Die beiden Sendespulen werden von ihren Sendern mit Wechselströmen einer Frequenz f_{M} sowie entgegengesetzter Phase gespeist. Dabei induziert die erste Sendespule in der Empfangsspule einen Fluss, der dem von der zweiten Sendespule in der Empfangsspule induzierten Fluss entgegengesetzt ist. Beide in der Empfangsspule induzierten Flüsse kompensieren sich somit gegenseitig, sodass der Empfänger keinerlei Empfangssignal in der Empfangsspule detektiert, falls sich kein externer metallischer Gegenstand in der Nähe einer solchen Spulenanordnung befindet. Der von den einzelnen Sendespulen in der Empfangsspule erregte Fluss Φ hängt von verschiedenen Größen, wie beispielsweise der Windungszahl und der Geometrie der Spulen sowie von Amplituden der in den beiden Sendespulen eingespeisten Ströme und ihrer gegenseitigen Phasenlage ab. Diese Größen sind bei derartigen Detektoren letztendlich so zu optimieren, dass bei Abwesenheit eines metallischen Gegenstandes in der Empfangsspule ein möglichst geringer Fluss Φ angeregt wird.

Alternativ ist es auch möglich, nur eine Sendespule zu verwenden und das Empfangswindungssystem derart im Raum zu positionieren, dass bei Abwesenheit metallischer Objekte in den Empfangsleiterstrukturen keine Spannung induziert wird.

Auch die Kombination mehrerer Sensoren auch unterschiedlicher Messprinzipien (kapazitiver Sensor, induktiver Sensor oder auch Netzspannungssensor) im einem Messgerät ist möglich.

## Patentansprüche

1. Verfahren zur Detektion von in einem Medium (10) eingeschlossenen Objekten (12), bei dem ein mit einem eingeschlossenen Objekt korreliertes Messsignal (UM) gemessen wird, aus welchem ein zweites Signal (S) erzeugt wird, das die gemessene Signalstärke des Messsignals (U_{M}) in segmentierter Weise wiedergibt, indem einzelne Segmenteinheiten des zweiten Signals (S) Intervalle der Signalstärke des Messsignals (UM) zugeordnet werden, **dadurch gekennzeichnet, dass** die Schwellwerte (U_{Sn}) der einzelnen Segmenteinheiten des zweiten Signals (S) in Abhängigkeit von der gemessenen Signalstärke des Messsignals (U_{M}) durch eine Steuerroutine variiert werden.

2. Verfahren nach Anspruch 1, **dadurch gekennzeichnet, dass** die Schwellwerte (U_{Sn}) der einzelnen Segmenteinheiten ausgehend von einer vorgegebenen, initialen Segmentierung variiert werden.

3. Verfahren nach Anspruch 1 oder 2, **dadurch gekennzeichnet, dass** die Schwellwerte (U_{Sn}) der einzelnen Segmenteinheiten erhöht werden, wenn die Signalstärke des Messsignals (UM) einen vorgegebenen ersten Grenzwert (U_{G1}) überschreitet.

4. Verfahren nach Anspruch 3, **dadurch gekennzeichnet, dass** der vorgegebene erste Grenzwert (U_{G1}) der maximalen, mit der initialen Segmentierung darstellbaren Signalstärke (U_{MV}) des Messsignal (U_{M}) entspricht.

5. Verfahren nach einem der vorhergehenden Ansprüche 3 oder 4, **dadurch gekennzeichnet, dass** die Schwellwerte (U_{Sn}) der einzelnen Segmenteinheiten variiert werden, falls eine neue maximale Signalstärke (Uₘₐₓ) gemessen wird, wobei die Schwellwerte (U_{Sn}) mit steigender Signalstärke des Messsignals (U_{M}) angehoben werden.

6. Verfahren nach Anspruch 5, **dadurch gekennzeichnet, dass** die Schwellwerte (U_{Sn}) der einzelnen Segmenteinheiten derart angehoben werden, dass das maximale mit der aktualisierten Segmentierung S darstellbare Messsignal (U_{MV}) der neu gemessenen maximalen Signalstärke des Messsignals (U_{Max}) entspricht.

7. Verfahren nach zumindest einem der vorhergehenden Ansprüche 3 bis 6 **dadurch gekennzeichnet, dass** die Schwellwerte (U_{Sn}) der einzelnen Segmenteinheiten abgesenkt werden, falls die Signalstärke des aktuell gemessenen Messsignals (U_{M}) unter den kleinsten Schwellwert (U_{S1}) der aktuellen Segmentierung absinkt.

8. Verfahren nach Anspruch 7, **dadurch gekennzeichnet, dass** die Schwellwerte (U_{Sn}) der einzelnen Segmenteinheiten nicht unter eine initiale Segmentierung abgesenkt werden.

9. Verfahren nach einem der vorhergehenden Ansprüche, **dadurch gekennzeichnet, dass** die Schwellwerte (U_{Sn}) der einzelnen Segmenteinheiten auf eine vorgegebene, initiale Segmentierung zurück gesetzt werden, falls die Signalstärke des Messsignals (U_{M}) einen zweiten Grenzwert (U_{G2}) unterschreitet.

10. Verfahren nach einem der vorhergehenden Ansprüche, **dadurch gekennzeichnet, dass** die Schwellwerte (U_{Sn}) der einzelnen Segmenteinheiten durch eine Steuerroutine in Abhängigkeit von der Signalstärke des Messsignals (U_{M}) gesetzt werden.

11. Verfahren nach einem der vorhergehenden Ansprüche, **dadurch gekennzeichnet, dass** das Messsignal (U_{M}) als Funktion einer lateralen Verschiebung (X) eines Sensors gemessen wird.

12. Messgerät, insbesondere ein handgehaltenes Ortungsgerät (24,124) zur Lokalisierung von in einem Medium eingeschlossenen Objekten (12), zur Durchführung des Verfahrens nach einem oder mehreren der Ansprüche 1 bis 11, **dadurch gekennzeichnet, dass** das Messgerät (24,124) über eine Ausgabeeinheit (AE,40) verfügt, die eine Wiedergabe einer mit dem Messsignal (U_{M}) korrelierten Ausgabegröße (S) in segmentierter Weise gestattet, wobei die Schwellwerte (U_{Sn}) der einzelnen Segementeinheiten der Ausgabegröße (S) in Abhängigkeit von der gemessenen Signalstärke des Messsignals (UM) durch eine Steuerroutine angepasst sind.

13. Messgerät nach Anspruch 12, **dadurch gekennzeichnet, dass** die Ausgabeeinheit (AE,40) eine optische Ausgabeeinheit (40) ist.

14. Messgerät nach Anspruch 13, **dadurch gekennzeichnet, dass** die Ausgabeeinheit (40) die Wiedergabe des zweiten Signals (S) in Form einer segmentierten Darstellung, insbesondere einer Balkendarstellung (38) ermöglicht.

15. Messgerät nach zumindest einem der Ansprüche 12 bis 14, **dadurch gekennzeichnet, dass** das Messgerät (24,124) über zumindest ein Empfangsleiterschleifensystem verfügt.

16. Messgerät nach zumindest einem der Ansprüche 12 bis 14, **dadurch gekennzeichnet, dass** das Messgerät (24,124) über zumindest einen Sensor verfügt, der mindestens eine Sendespule und mindestens ein Empfangsleiterschleifensystem aufweist, welche induktiv miteinander gekoppelt sind.

## Claims

1. Method for detecting objects (12) enclosed in a medium (10), in which a measurement signal (U_{M}) correlated with an enclosed object is measured and is used to generate a second signal (S) which represents the measured signal strength of the measurement signal (U_{M}) in a segmented manner by assigning individual segment units of the second signal (S) to intervals of the signal strength of the measurement signal (U_{M}), **characterized in that** the threshold values (U_{Sn}) of the individual segment units of the second signal (S) are varied by a control routine on the basis of the measured signal strength of the measurement signal (U_{M}).

2. Method according to Claim 1, **characterized in that** the threshold values (U_{Sn}) of the individual segment units are varied starting from a predefined, initial segmentation.

3. Method according to Claim 1 or 2, **characterized in that** the threshold values (U_{Sn}) of the individual segment units are increased if the signal strength of the measurement signal (U_{M}) exceeds a predefined first limit value (U_{G1}).

4. Method according to Claim 3, **characterized in that** the predefined first limit value (U_{G1}) corresponds to the maximum signal strength (U_{MV}) of the measurement signal (U_{M}) which can be represented with the initial segmentation.

5. Method according to either of the preceding Claims 3 and 4, **characterized in that** the threshold values (Usn) of the individual segment units are varied if a new maximum signal strength (Uₘₐₓ) is measured, the threshold values (Usn) being increased with increasing signal strength of the measurement signal (U_{M}).

6. Method according to Claim 5, **characterized in that** the threshold values (U_{Sn}) of the individual segment units are increased in such a manner that the maximum measurement signal (U_{MV}) which can be represented with the updated segmentation S corresponds to the newly measured maximum signal strength of the measurement signal (U_{Max}).

7. Method according to at least one of the preceding Claims 3 to 6, **characterized in that** the threshold values (Usn) of the individual segment units are reduced if the signal strength of the currently measured measurement signal (U_{M}) falls below the lowest threshold value (U_{S1}) of the current segmentation.

8. Method according to Claim 7, **characterized in that** the threshold values (U_{Sn}) of the individual segment units are not reduced below an initial segmentation.

9. Method according to one of the preceding claims, **characterized in that** the threshold values (U_{Sn}) of the individual segment units are reset to a predefined, initial segmentation if the signal strength of the measurement signal (U_{M}) falls below a second limit value (U_{G2}).

10. Method according to one of the preceding claims, **characterized in that** the threshold values (U_{Sn}) of the individual segment units are set by a control routine on the basis of the signal strength of the measurement signal (U_{M}).

11. Method according to one of the preceding claims, **characterized in that** the measurement signal (U_{M}) is measured as a function of a lateral displacement (X) of a sensor.

12. Measuring device, in particular a hand-held locating device (24, 124) for locating objects (12) enclosed in a medium, for carrying out the method according to one or more of Claims 1 to 11, **characterized in that** the measuring device (24, 124) has an output unit (AE, 40) which allows an output variable (S) correlated with the measurement signal (U_{M}) to be represented in a segmented manner, the threshold values (U_{Sn}) of the individual segment units being adapted by a control routine to the output variable (S) on the basis of the measured signal strength of the measurement signal (U_{M}).

13. Measuring device according to Claim 12, **characterized in that** the output unit (AE, 40) is an optical output unit (40).

14. Measuring device according to Claim 13, **characterized in that** the output unit (40) makes it possible to represent the second signal (S) in the form of a segmented representation, in particular a bar graph (38).

15. Measuring device according to at least one of Claims 12 to 14, **characterized in that** the measuring device (24, 124) has at least one receiving conductor loop system.

16. Measuring device according to at least one of Claims 12 to 14, **characterized in that** the measuring device (24, 124) has at least one sensor which has at least one transmitting coil and at least one receiving conductor loop system which are inductively coupled to one another.

## Revendications

1. Procédé destiné à détecter des objets (12) renfermés dans un milieu (10), lors duquel on mesure un signal de mesure (U_{M}) qui est en corrélation avec un objet contenu, à partir duquel il est généré un deuxième signal (S), qui reproduit de manière segmentée l'intensité de signal mesurée du signal de mesure (U_{M}) en ce qu'à des unités segmentées individuelles du deuxième signal (S) sont associés des intervalles de l'intensité de signal du signal de mesure (U_{M}), **caractérisé en ce qu'**une routine de commande fait varier les valeurs seuils (U_{Sn}) des unités segmentées individuelles du deuxième signal (S) en fonction de l'intensité de signal mesurée du signal de mesure (U_{M}).

2. Procédé selon la revendication 1, **caractérisé en ce qu'**on fait varier les valeurs seuils (U_{Sn}) des unités segmentées individuelles à partir d'une segmentation initiale prédéfinie.

3. Procédé selon la revendication 1 ou la revendication 2, **caractérisé en ce qu'**on augmente les valeurs seuils (Usn) des unités segmentées individuelles lorsque l'intensité de signal du signal de mesure (U_{M}) dépasse une première valeur limite (U_{G1}) prédéfinie.

4. Procédé selon la revendication 3, **caractérisé en ce que** la première valeur limite (U_{G1}) prédéfinie correspond à l'intensité de signal (U_{MV}) maximale du signal de mesure (U_{M}) susceptible d'être représentée avec la segmentation initiale.

5. Procédé selon l'une quelconque des revendications 3 ou 4 précédentes, **caractérisé en ce qu'**on fait varier les valeurs seuils (U_{Sn}) des unités segmentées individuelles si une nouvelle intensité de signal maximale (Uₘₐₓ) est mesurée, les valeurs seuils (U_{Sn}) étant relevées au fur et à mesure de l'augmentation de l'intensité de signal du signal de mesure (U_{M}).

6. Procédé selon la revendication 5, **caractérisé en ce que** les valeurs seuils (U_{Sn}) des unités segmentées individuelles sont relevées de telle sorte que le signal de mesure (U_{MV}) maximal susceptible d'être représenté avec la segmentation S mise à jour corresponde à l'intensité de signal maximale mesurée pour le signal de mesure (U_{Max}).

7. Procédé selon au moins l'une quelconque des revendications 3 à 6, **caractérisé en ce que** les valeurs seuils (Uₛₙ) des unités segmentées individuelles sont abaissées si l'intensité de signal du signal de mesure (U_{M}) actuellement mesuré tombe sous la plus petite valeur seuil (U_{S1}) de la segmentation actuelle.

8. Procédé selon la revendication 7, **caractérisé en ce que** les valeurs seuils (U_{Sn}) des unités segmentées individuelles ne sont pas abaissées en-dessous d'une segmentation initiale.

9. Procédé selon l'une quelconque des revendications précédentes, **caractérisé en ce que** les valeurs seuils (U_{Sn}) des unités segmentées individuelles sont réinitialisées sur une segmentation initiale prédéfinie si l'intensité de signal du signal de mesure (U_{M}) est inférieure à une deuxième valeur limite (U_{G2}).

10. Procédé selon l'une quelconque des revendications précédentes, **caractérisé en ce que** les valeurs seuils (U_{Sn}) des unités segmentées individuelles sont placées par une routine de commande en fonction de l'intensité de signal du signal de mesure (U_{M}).

11. Procédé selon l'une quelconque des revendications précédentes, **caractérisé en ce que** le signal de mesure (U_{M}) est mesuré en tant que fonction d'un déplacement (X) latéral d'un capteur.

12. Instrument de mesure, notamment un instrument manuel de localisation (24, 124) destiné à localiser des objets (12) contenus dans un milieu, pour la réalisation du procédé selon l'une quelconque ou plusieurs des revendications 1 à 11, **caractérisé en ce que** l'instrument de mesure (24, 124) dispose d'une unité de sortie (AE, 40) qui permet une reproduction de manière segmentée d'une grandeur de sortie (S) mise en corrélation avec le signal de mesure (U_{M}), les valeurs seuils (U_{Sn}) des unités segmentées individuelles de la grandeur de sortie (S) étant adaptées par une routine de commande en fonction de l'intensité de signal mesurée pour le signal de mesure (U_{M}).

13. Instrument de mesure selon la revendication 12, **caractérisé en ce que** l'unité de sortie (AE, 40) est une unité de sortie (40) optique.

14. Instrument de mesure selon la revendication 13, **caractérisé en ce que** l'unité de sortie (40) permet la reproduction du deuxième signal (S) sous forme d'une représentation segmentée, notamment d'un bargraphe (38).

15. Instrument de mesure selon au moins l'une quelconque des revendications 12 à 14, **caractérisé en ce que** l'instrument de mesure (24, 124) dispose d'au moins un système de boucle conductrice de réception.

16. Instrument de mesure selon au moins l'une quelconque des revendications 12 à 14, **caractérisé en ce que** l'instrument de mesure (24, 124) dispose d'au moins un capteur qui comporte au moins une bobine émettrice et au moins un système de boucle conductrice de réception qui sont couplés l'une à l'autre de manière inductive.
